# EUROPÄISCHE PATENTSCHRIFT

(11) **EP 0 590 334 B1**
(45) Veröffentlichungstag und Bekanntmachung des Hinweises auf die Patenterteilung: **19.11.1997**
(21) Anmeldenummer: 93113988.5
(22) Anmeldetag: 01.09.1993
(51) Int. Cl.: H04M 3/42, H04Q 11/04

(54) **Verfahren zur Softkey-Steuerung von Kommunikationssendgeräten eines Kommunikationssystems**
Soft-key control of communication terminals
Procédé de commande des terminaux de communication par touches programmables "soft-key"

(30) Priorität: 29.09.1992 DE 4232676
(43) Veröffentlichungstag der Anmeldung: 06.04.1994
(73) Patentinhaber: SIEMENS AKTIENGESELLSCHAFT, 80333 München (DE)
(72) Erfinder: Kienberger, Helmut, Dipl.-Ing., D-81475 München (DE); Weber, Dietmar, Dipl.-Math., D-81375 München (DE)

(56) Entgegenhaltungen:
- EP-A- 0 306 693
- US-A- 4 782 517
- US-A- 4 972 183
- US-A- 5 012 466
- PATENT ABSTRACTS OF JAPAN vol. 13, no. 564 (E-860)14. Dezember 1989 & JP-A-01 235 457 (TOSHIBA) 20. September 1989
- DATABASE WPI Week 8942, Derwent Publications Ltd., London, GB; AN 89-308291 ANONYMOUS 'Remote administration of telecommunication terminals - by making terminals programmable by down-loading from control centre such that programmable function keys are provided w.r.t. host computer' & INTERNATIONAL TECHNOLOGY DISCLOSURE Nr. 13 , 25. September 1989
- PHILIPS TELECOMMUNICATION AND DATA SYSTEMS REVIEW Bd. 48, Nr. 3 , September 1990 , HILVERSUM NL Seiten 24 - 32 XP168032 HAVERMANS ET AL. 'ISPBX evolution towards standard ISDN'

## Beschreibung

Die Erfindung betrifft ein Verfahren gemäß Oberbegriff des Patentanspruchs 1.

Das Integrieren von ISDN-Funktionen in eine bereits vorhandene Netzumgebung bedeutet eine große Vielfalt an Funktionen in Peripherie und Steuerung. Unterschiedliche Gerätetypen und Netze für Sprach-, Text-, Daten- und Bildkommunikation erfordern verschiedene Schnittstellen, Signalisierungen, Übertragungsgeschwindigkeiten und Protokolle. Diese Funktionen sowie die Möglichkeit einer technologischen und funktionalen Innovation werden durch modulare Peripheriekonzepte zeitgemäßer ISDN-Kommunikationssysteme bereitgestellt. Die Systemsteuerung realisiert das Durchschalten sowie das Speichern und Verarbeiten von Informationen abhängig von der Anlagengröße mit einem einheitlichen modularen Prozessorkonzept.

Die Realisierung jener Funktionen und Leistungsmerkmale erfordert aber die Verwendung von Endgeräten, die analoge Kommunikationssysteme bis dahin nicht gekannt haben. Insbesondere der Einsatz von softkeygesteuerten Kommunikationsendgeräten erleichtert das Benutzen einer Vielzahl von im Kommunikationssystem ablaufenden Teilnehmerleistungsmerkmalen. Softkeysteuerung bedeutet dabei, daß Teilnehmerleistungsmerkmale auf einer Anzeigevorrichtung des Kommunikationsendgerätes zur Anzeige gebracht werden und entsprechend dem Teilnehmerwunsch durch Betätigen einer Taste bestätigt werden können. In der Druckschrift "Entwurf und Realisierung einer Softkey-Benutzeroberfläche für das Endgerät Set 191, Saturn 88", Abschlußarbeit zur Erlangung des Diplomgrades der Elektrotechnik des Fachbereichs 3, Elektrotechnik der Fachhochschule Bochum, von Hans Rodelhüser, Bochum, November 1989, ist ein derartiges Konzept detailliert beschrieben. Darin wird in Abhängigkeit von einem am Kommunikationsendgerät betätigten Tastendruck in der Anzeigevorrichtung ein Teilnehmerleistungsmerkmal sichtbar gemacht. Das Teilnehmerleistungsmerkmal ist in ein Menü eingebettet, womit eine Vielzahl von Teilnehmerleistungsmerkmalen duch Betätigen einer Taste optisch - je nach logischem Aufbau des Menüs - durchlaufen werden können. Die Realisierung der Menüsteuerung erfolgt dabei in einer zentralen Steuereinrichtung des Kommunikationssystems. Diese Vorgehensweise ist insbesondere für Kommunikationssysteme anwendbar, die kleine oder mittlere Größenordnungen umfassen; in der Praxis bedeutet dies, daß etwa bis zu 100 Teilnehmer an ein derartiges Kommunikationssystem anschließbar sind. Problematisch an dieser Vorgehensweise ist jedoch, daß ein derartiges Konzept für ein Kommunikationssystem mit etwa mehreren 1000 angeschlossenen Teilnehmern nicht mehr realisierbar ist. Da die Menütabellen sowie die sie steuernde Menüsteuerung in der zentralen Steuereinrichtung des Kommunikationssystems realisiert ist, bedeutet das Betätigen der Tasten durch eine Vielzahl von Teilnehmern, daß die zentrale Steuereinrichtung vorwiegend Menüfunktionen ausführt und demzufolge für andere Aufgaben währenddessen nicht zur Verfügung stehen kann. In der Praxis führt dies zu einer Dynamikverminderung des Kommunikationssystems.

Weiterhin ist in der europäischen Patentanmeldung 91109744.2 ein Verfahren zum Beeinflussen einer in einem Kommunikationsendgerät implementierten Signalisierungsprozedur vorgeschlagen. In diesem Verfahren werden die Menütabellen sowie diese steuernden Prozeduren in das Kommunikationsendgerät ausgelagert. Prolematisch daran ist jedoch, daß damit die Kommunkationsendgeräte selbst nur unter hohem technischen Aufwand realisierbar sind. Weiterhin wird die Schnittstelle zwischen Endgerät und Kommunikationssystem sehr komplex, was in der Praxis ein zusätzlicher Aufwand im Signalisierungsprotokoll bedeutet. Derart komplexe Signalisierungsprotokolle können aber ebenfalls zu einer Dynamikverminderung im System beitragen.

Der Erfindung liegt die Aufgabe zugrunde, die Softkeysteuerung von Kommunikationsendgeräten eines Kommunikationssystems derart zu gestalten, daß eine Dynamikverminderung des Kommunikationssystems verhindert wird.

Die Erfindung wird ausgehend von dem gemäß Oberbegriff des Patentanspruchs 1 definierten Kommunikationssystem durch die kennzeichnende Merkmale dieses Patentanspruchs gelöst.

Wesentliche Vorteile der Erfindung sind darin zu sehen, daß zeitkritische Teile der Menüsteuerung sowie die Menütabellen, die beim Stand der Technik in der zentralen Steuereinrichtung abgespeichert waren, in die Systemperipherie auf ein Teilnehmeranschlußmodul ausgelagert werden. Vorteilhaft daran ist, daß das Blättern in den Menütabellen ausschließlich von der Software auf dem Teilnehmeranschlußmodul gesteuert wird, was eine Entlastung der zentralen Steuereinrichtung darstellt, die in diesem Fall andere Aufgaben übernehmen kann. Vorteilhaft an einer derartigen Vorgehensweise ist weiterhin, daß beim Blättern keinerlei Verzögerungszeiten für das jeweilige Kommunikationsendgerät entstehen.

Gemäß Anspruch 2 ist vorgesehen, daß bei Inbetriebnahme eines Kommunikationsendgerätes endgeräteindividuelle Informationen in eine statische Datenbasis eingeschrieben werden und in Abhängigkeit von denselben eine Vormarkierung von in den weiteren Menütabellen abgelegten Teilnehmerleistungsmerkmalen durchgeführt wird. Dies hat insbesondere den Vorteil, daß im System jederzeit endgeräteindividuelle Informationen verfügbar sind. Endgeräteindividuelle Informationen sind z.B. Informationen darüber, welche Teilnehmerleistungsmerkmale im Sinne einer Teilnehmerberechtigung von dem jeweiligen Endgerät durchführbar sind.

Gemäß Anspruch 3 ist vorgesehen, daß bei Inbetriebnahme des Kommunikationssystems systemspezifische Informationen in die statische Datenbasis eingeschrieben werden und in Abhängigkeit von denselben eine Vormarkierung von in den weiteren Menütabellen abgelegten Teilnehmerleistungsmerkmalen durchgeführt wird. Vorteilhaft daran ist, daß jederzeit im Kommunikationssystem die systemspezifischen Informationen verfügbar sind und nicht in komplexer Weise generiert werden müssen. Unter systemspezifischen Informationen sind z.B. Informationen zu verstehen, die den Ausbauzustand des Kommunikationssystems betreffen. Da beispielsweise die Software eines Kommunikationssystems bei der Erstellung möglichst global und nicht systemspezifisch konzipiert wird, bedeutet dies, daß hier Informationen darüber abgelegt sind, welche Teilnehmerleistungsmerkmale von der jeweiligen Software durchführbar sind.

Gemäß Anspruch 4 ist vorgesehen, daß in der dynamischen Datenbasis Signalisierungsinformationen des rufenden Kommunikationsendgerätes sowie des für die jeweilige Verbindung in Frage kommenden gerufenen Kommunikationsendgerätes aktuell festgehalten werden. Damit ist der Vorteil verbunden, daß verbindungsindividuelle Signalisierungsinformationen in einer dynamischen Datenbasis festgehalten sind. Unter Zuhilfenahme dieser verbindungsindividuellen Signalisierungsdaten können dann die Teilnehmerleistungsmerkmale für das jeweilige Kommunikationsendgerät ausgewählt werden, die momentan von demselben ausgeführt werden können. In der Praxis bedeutet dies, daß eine "Momentaufnahme" der in der statischen und dynamischen Datenbasis abgelegten Informationen durchgeführt wird, in der nur bestimmte in den Menütabellen abgespeicherte Teilnehmerleistungsmerkmale den jewieligen Kommunikationsendgeräten endgeräteindividuell zugewiesen werden. Beispielsweise kann das Teilnehmerleistungsmerkmal "Rückruf", falls das rufende Kommunikationsendgerät eine Verbindung über ein öffentliches, analoges Netz wünscht, für das jeweilige Kommunikationsendgerät gesperrt werden, da dieses Teilnehmerleistungsmerkmal im analogen Netz nicht realisiert ist.

Gemäß Anspruch 5 ist vorgesehen, daß vom zentralen Steuerprozeß Bewertungen der in der dynamischen Datenbasis sowie der statischen Datenbasis abgelegten Informationen durchgeführt werden. Damit ist der Vorteil verbunden, daß, bevor die Teilnehmerleistungsmerkmale dem jeweiligen Kommunikationsendgerät zugeführt werden, ermittelt wird, welche Teilnehmerleistungsmerkmale im Moment des Abrufs überhaupt möglich sind.

Gemäß Anspruch 6 ist vorgesehen, daß die Resultate der Bewertungen in einer Verknüpfungstabelle miteinander logisch verknüpft und das Ergebnis in einem Vektor aufgenommen werden. Der Vektor wird dann als Meldung über eine Steuerleitung zu dem jeweiligen Teilnehmeranschlußmodul gesendet. Damit ist der Vorteil verbunden, daß die Kommunikation zwischen der zentralen Steuereinrichtung und dem jeweiligen Teilnehmeranschlußmodul allein durch Aussenden dieses Vektors durchgeführt wird. Dies bedeutet in der Praxis eine Entlastung der jeweiligen Steuerleitung, womit eine Dynamikverminderung verhindert wird.

Im folgenden wird die Erfindung anhand einer Zeichnung näher erläutert.

Es zeigen
- FIG 1: das Blockschaltbild eines Kommunikationssystems mit einer zentralen Steuereinrichtung CP, einem Teilnehmeranschlußmodul SLMO sowie daran angeschlossenen Kommunikationsendgeräten KE.
- FIG 2: ein Flußdiagramm des erfindungsgemäßen Verfahrens.

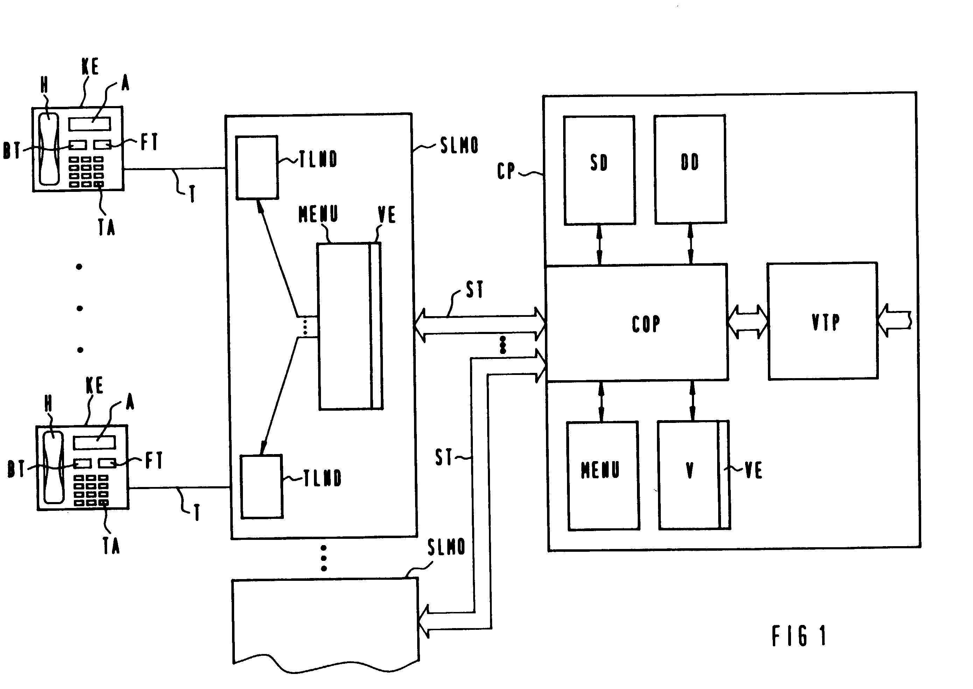

In der in Figur 1 aufgezeigten zentralen Steuereinrichtung CP (Central Processing) läuft ein die Koordinierungsvorgänge zur Softkeysteuerung durchführender zentraler Steuerprozeß COP ab. Weiterhin sind in der zentralen Steuereinrichtung CP vermittlungstechnische Prozesse VTP aufgezeigt, die den Auf- und Abbau einer Verbindung durchführen. Weiterhin sind in der zentralen Steuereinrichtung CP Menütabellen MENU sowie eine statische Datenbasis SD und eine dynamische Datenbasis DD abgelegt.

In den Menütabellen MENU sind alle Teilnehmerleistungsmerkmale nach einem logischen Schema abgelegt. Dieses weist in seinem Aufbau eine Vielzahl von logischen Verzweigungen auf, die nur in einer Richtung gesteuert werden können. Dabei ist jedem Teilnehmerleistungsmerkmal ein bestimmter Text, der am Kommunikationsendgerät KE zur Anzeige gebracht wird, zugeordnet. Das Aufsuchen eines bestimmten Teilnehmerleistungsmerkmals erfolgt also, ausgehend von einem, eine Teilnehmerleistungsmerkmalgruppe definierenden Verzweigungspunkt, in einer Richtung bis das gewünschte Teilnehmerleistungsmerkmal aufgefunden ist. In der statischen Datenbasis SD sind systemspezifische Informationen abgespeichert. Dies sind Informationen über Teilnehmerleistungsmerkmale, die in dem jeweiligen Kommunikationssystem realisiert und systemweit für alle Kommunikationsendgeräte KE freigegeben sind. Weiterhin sind in der statischen Datenbasis SD endgeräteindividuelle Informationen enthalten. Dabei handelt es sich um Informationen darüber, welche Teilnehmerleistungsmerkmale für das jeweilige Kommunikationsendgerät KE freigegeben oder gesperrt sind. Üblicherweise werden derartige Informationen bei Inbetriebnahme eines Kommunikationsendgerätes KE im Kommunikationssystem festgelegt, wobei dann eine entsprechende Aktualisierungs/Erweiterung der in der statischen Dabenbasis SD abgelegten Informationen vorgenommen wird. In der dynamischen Datenbasis DD sind Informationen über die aktuellen Zustände aller im System gerade vorhandenen Verbindungen sowie der beteiligten Verbindungsspeicher festgehalten. Derartige Informationen ändern sich beim Wechsel der Verbindungssituation und müssen demzufolge ständig aktualisiert werden. Weiterhin sind in der dynamischen Datenbasis DD Informationen über den vermittlungstechnischen Zustand der Kommunikationsendgeräte KE abgelegt. Darunter sind Informationen zu verstehen, die bespielsweise Auskunft darüber geben, ob der Hörer abgehoben oder aufgelegt bzw. die Tastatur betätigt ist oder nicht. Die von den Kommunikationsendgeräten KE ausgehenden Informationen werden über 2B-Kanäle und 1D-Kanal zur zentalen Steuereinrichtung CP übertragen.

Die zentrale Steuereinrichtung CP ist über wenigstens eine Steuerleitung ST mit allen Teilnehmeranschlußmodulen SLMO verbunden. Zentraler Bestandteil der Software des Teilnehmeranschlußmoduls SLMO sind weitere Menütabellen MENU, sowie die Verwaltung von endgeräteindividuellen Datenbasen TLND.

Diese sind einem Kommunikationsendgerät KE in eindeutiger Weise zugeordnet und repräsentieren teilnehmerindividuelle Menütabellen; sie entstehen aus den weiteren Menütabellen MENU des Teilnehmeranschlußmoduls SLMO dadurch, daß der zentrale Steuerprozeß COP die Informationen über die jeweiligen vermittlungstechnischen Zustände des Kommunikationsendgerätes, die Signalisierungsinformationen, die systemspezifischen sowie die endgerätespezifischen Informationen logisch miteinander verknüpft und damit bestimmte Teilnehmerleistungsmerkmale für das jeweilige Kommunikationsendgerät KE auswählt. Damit werden die in der aktuellen Situation nicht nutzbaren Funktionen in den jeweiligen teilnehmerindividuellen Datenbasen LND gesperrt. Da insbesondere die in der dynamischen Datenbasis DD abgelegten Informationen häufig aktualisiert werden, müssen vom zentralen Steuerprozeß COP bei jeder Aktualisierung die die teilnehmerindividuellen Menütabellen definierenden teilnehmerindividuellen Datenbasen TLND überprüft und falls notwendig geändert werden. An jeden Teilnehmeranschlußmodul SLMO sind bis zu 8 Kommunikationsendgeräte KE über Teilnehmeranschlußleitungen T angeschlossen. Dies bedeutet, daß die teilnehmerindividuelle Datenbasis TLND 8 mal pro Teilnehmeranschlußmodul SLMO vorhanden ist. Die Kommunikationsendgeräte KE sind mit einem Hörapparat H, einer Tastatur TA, einer Anzeigevorrichtung A sowie einer Folgetaste FT und einer Bestätigungstaste BT ausgestattet.

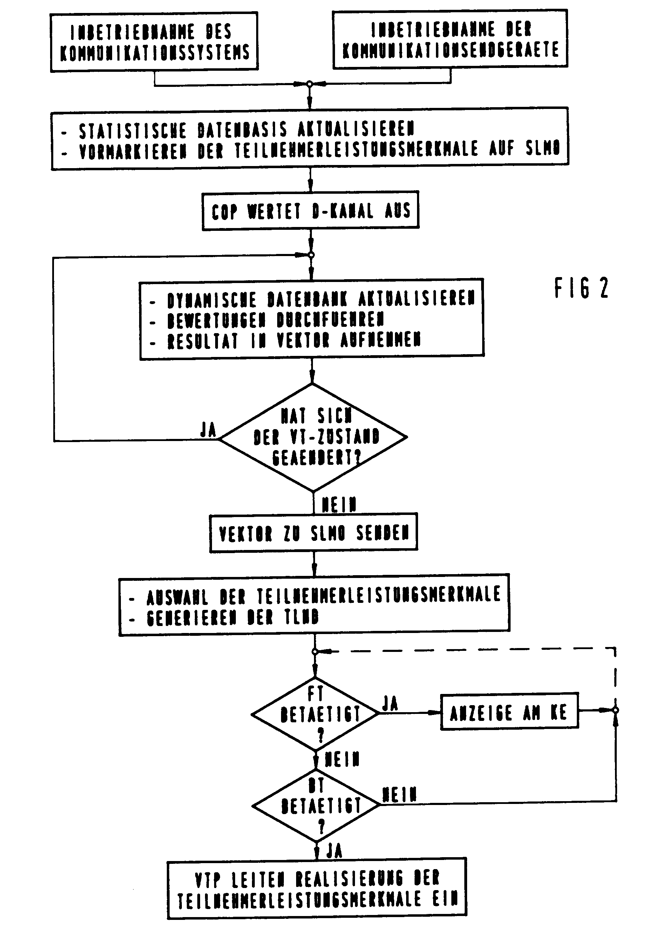

Im folgenden wird gemäß dem in Fig. 2 dargestellten Flußdiagramm davon ausgegangen, daß der Teilnehmer eines Kommunikationsendgerätes KE durch Betätigen einer Folgetaste FT, die in einem Menü logisch angeordneten und im aktuellen Zustand möglichen Teilnehmerleistungsmerkmale auf der Anzeigevorrichtung A seines Kommunikationsendgerätes KE nacheinander zur Anzeige bringt. In diesem Fall werden zunächst die jeweiligen vermittlungstechnischen Zustandsinformationen des Kommunikationsendgerätes KE im D-Kanal zum Kommunikationssystem übertragen. Weiterhin werden im Falle eines von einem Kommunikationsendgerät KE ausgehenden Verbindungswunsches für eine Verbindung zu einem anderen Kommunikationsendgerät, die die jeweilige Verbindung betreffenden verbindungsindividuellen Signalisierungsinformationen im D-Kanal zum Kommunikationssystem übertragen. Auf dem Teilnehmeranschlußmodul SLMO wird dem D-Kanal weiterhin eine für das Kommunikationsendgerät KE spezielle Kennung zugefügt. Die Informationen der D-Kanäle werden im folgenden über die Steuerleitung ST zur zentralen Steuereinrichtung CP weitergeleitet. Dort überwacht der zentrale Steuerprozess COP die D-Kanäle auf Signalisierungsinformationen bzw. vermittlungstechnische Zustandsinformationen der Kommunikationsendgeräte KE. Vom zentralen Steuerprozeß COP werden dann die Signalisierungsinformationen bzw. vermittlungstechnischen Zustandsinformationen dem jeweiligen D-Kanal entnommen und damit eine dynamische Datenbasis DD aktualisiert. Die dynamische Datenbasis DD enthält damit Informationen über den jeweiligen aktuellen vermittlungstechnischen Zustand der Kommunikationsendgeräte KE sowie Informationen über die jeweiligen Verbindungen. Im folgenden werden dann vom zentralen Steuerprozeß COP logische Verknüpfungen im Sinne einer Bewertung zwischen den in der dynamischen Datenbasis DD abgelegten Informationen sowie den in den Menütabellen MENU abgespeicherten Teilnehmerleistungsmerkmale durchgeführt:

Dabei werden erste logische Verknüpfungen im Sinne einer Bewertung bereits bei Inbetriebnahme des Kommunikationssystems bzw. der Kommunikationsendgeräte KE durchgeführt. In ersterem Fall wird vom zentralen Steuerprozeß COP überprüft, welche Teilnehmerleistungsmerkmale der Menütabellen MENU durch die in der statischen Datenbasis SD abgelegten Systeminformationen zugelassen sind. In letzterem Fall wird vom zentralen Steuerprozeß COP überprüft, welche Teilnehmerleistungsmerkmale der Menütabellen MENU überhaupt auf den jeweiligen Kommunikationsendgeräten KE durchführbar sind, bzw. welche Teilnehmerleistungsmerkmale für das jeweilige Kommuniktionsendgerät KE freigegeben sind. Mit den Ergebnissen beider Überprüfungen werden dann die auf dem Teilnehmeranschlußmodul SLMO abgelegten weiteren Menütabellen (MENU) vormarkiert.

Weiterhin wird vom zentralen Steuerprozeß COP in einer ersten Bewertung überprüft, welche in den Menütabellen MENU abgelegten Teilnehmerleistungsmerkmale bei dem momentanen vermittlungstechnischen Zuständen des jeweiligen Kommunikationsendgerätes KE durchführbar sind. Das Ergebnis wird in einer Verknüpfungstabelle V abgelegt. Weiterhin wird vom zentralen Steuerprozeß COP in einer zweiten Bewertung überprüft, welche der in den Menütabellen MENU abgelegten Teilnehmerleistungsmerkmale aufgrund der in der dynamischen Datenbasis DD abgelegten verbindungsindividuellen Signalisierungsinformationen durchgeführt werden können. Das Ergebnis wird ebenfalls in der Verknüpfungstabelle V abgelegt. Damit enthält die Verknüpfungstabelle V die Resultate beider Bewertungen. Schließlich wird vom zentralen Steuerprozeß COP eine logische Verknüpfung beider Bewertungen durchgeführt und in einem Vektor VE abgespeichert. Dieser Vektor wird dann vom zentralen Steuerprozeß COP über die Steuerleitung ST zu dem jeweiligen Teilnehmeranschlußmodul SLMO übertragen. Mit dem Vektor VE werden die auf dem Teilnehmeranschlußmodul SLMO abgespeicherten Menütabellen MENU markiert. Damit ist - auf der Basis der bereits erfolgten Vormarkierung sowie der Markierung - eine eindeutige Bestimmung von Teilnehmerleistungsmerkmalen gegeben, die momentan aufgrund der vermittlungstechnischen Zustände des Kommunikationsendgerätes KE, der von diesem ausgehenden und die jeweilige Verbindung betreffenden Signalisierungsinformation sowie der systemspezifischen und endgerätespezifischen Informationen durchführbar bzw. für das jeweilige Kommunikationsendgerät KE freigegeben sind. Die Teilnehmerleistungsmerkmale, die aufgrund der momentanen Situation nicht durchführbar sind, werden somit aus den weiteren Menütabellen MENU genommen. Die derart markierten Teilnehmerleistungsmerkmale werden als endgeräteindividuelles Menü in eine teilnehmerindividuelle Datenbasis TLND kopiert. Da an dem Teilnehmeranschlußmodul SLMO bis zu acht Kommunikationsendgeräte KE anschließbar sind, bedeutet dies, daß jedem der acht Kommunikationsendgeräte KE eine teilnehmerindividuelle Datenbasis TLND zuordenbar ist.

Damit können vom Kommunikationsendgerät KE aus mehrere Teilnehmerleistungsmerkmale nacheinander entsprechend dem logischen Aufbau des Menüs durch Betätigen der Folgetaste FT gesucht und über die Anzeigevorrichtung A sichtbar gemacht werden. Da vom zentralen Steuerprozeß COP der D-Kanal der jeweiligen Kommunikationsendgeräte KE überwacht wird, kann jeder Wechsel der Verbindungssituation sowie jede vermittlungstechnische Zustandsänderung der Kommunikationsendgeräte KE unmittelbar ermittelt werden und demzufolge die zugeordneten teilnehmerindividuellen Datenbasen TLND aktualisiert werden. Die Aktualisierung erfolgt dabei unabhängig vom Betätigen der Folgetaste FT. Durch das Betätigen derselben werden lediglich die Teilnehmerleistungsmerkmale der teilnehmerindividuellen Datenbasen TLND durchsucht und zur Anzeige gebracht, ohne daß dabei eine Kommunikation mit der zentralen Steuereinrichtung durchgeführt werden muß.

Im folgenden wird davon ausgegangen, daß der Teilnehmer eines bestimmten Kommunikationsendgerätes KE das auf der Anzeigevorrichtung A seines Kommunikationsendgerätes KE angezeigte Teilnehmerleistungsmerkmal akzeptiert und benutzen möchte. In diesem Fall wird vom Teilnehmer eine Bestätigungstaste BT betätigt. Die dem Teilnnehmerleistungsmerkmal zugeordnete Signalisierungsinformation wird im D-Kanal zur zentralen Steuereinrichtung COP durchgereicht. Der den D-Kanal überwachende zentrale Steuerprozeß COP bewertet diese Signalisierungsinformationen und sendet den vermittlungstechnischen Prozessen VTP eine entsprechende Meldung. Diese leiten dann ihrerseits unter Zuhilfenahme der jeweiligen vermittlungstechnischen Funktionen entsprechende Maßnahmen zur Realisierung des Teilnehmerleistungsmerkmals ein (Benutzerführung).

## Patentansprüche

1. Verfahren zur Softkey-Steuerung von Kommunikationsendgeräten eines Kommunikationssystems, mit
- softkeyfähigen Kommunikationsendgeräten (KE), die über Teilnehmeranschlußleitungen (T) an wenigstens einen Teilnehmeranschlußmodul (SLMO) angeschlossen sind und die die von ihnen ausgehenden Informationen in zwei B-Kanälen und einem D-Kanal übertragen, wobei im D-Kanal Signalisierungsinformationen und/oder vermittlungstechnische Zustandsinformationen des jeweiligen Kommunikationsendgerätes (KE) übertragen werden und mit
- einer zentralen Steuereinrichtung (CP), in der eine Mehrzahl von Teilnehmerleistungsmerkmale beinhaltenden Menütabellen (MENU) sowie Prozeduren zur Softkey-Steuerung der Kommunikationsendgeräte (KE) abgespeichert sind,
**dadurch gekennzeichnet,**
- daß durch einen in der zentralen Steuereinrichtung (CP) ablaufenden, die D-Kanäle der einzelnen Kommunikationsendgeräte (KE) überwachenden zentralen Steuerprozeß (COP) anhand der den D-Kanälen entnommenen Signalisierungsinformationen und/oder vermittlungstechnischen Zustandsinformationen eine in der zentralen Steuereinrichtung (CP) abgelegte dynamische Datenbasis (DD) aktualisiert wird,
- daß der zentrale Steuerprozeß (COP) bei jeder Zustandsänderung der in der dynamischen Datenbasis abgelegten Informationen dazu veranlaßt wird, Bewertungen der in der dynamischen Datenbasis (DD) abgelegten Informationen durchzuführen und in Abhängigkeit vom Resultat der Bewertungen nur bestimmte Teilnehmerleistungsmerkmale der Menütabellen (MENU) für das jeweilige Kommunikationsendgerät (KE) auszuwählen,
- daß auf die Auswahl der Teilnehmerleistungmerkmale hin vom zentralen Steuerprozeß (COP) eine das Resultat der Auswahl beinhaltende Meldung zu dem mit dem jeweiligen Kommunikationsendgerät (KE) verbundenen Teilnehmeranschlußmodul (SLMO) gesendet wird,
- daß eine Markierung der Teilnehmerleistungsmerkmale in in dem Teilnehmeranschlußmodul (SLMO) abgespeicherten weiteren Menütabellen (MENU) durchgeführt wird,
- daß die derart merkierten Teilnehmerleistungsmerkmale mit bereits bei der Inbetriebnahme vormarkierten Teilnehmerleistungsmerkmalen logisch verknüpft und als Resultat der Verknüpfung nur bestimmte Teilnehmerleistungsmerkmale ausgewählt werden und diese einer endgeräteindividuellen Datenbasis (TLND) zugeführt werden,
- daß am jeweiligen Kommunikationsendgerät (KE) jeweils eines der ausgewählten Teilnehmerleistungsmerkmale in Abhängigkeit vom Betätigen einer an dem jeweiligen Kommunikationsendgesrät (KE) angeordneten Folgetaste (FT) zur Anzeige gebracht wird, und
- daß auf das Bestätigen des an dem jeweiligen Kommunikationsendgerät (KE) gerade zur Anzeige gebrachten Teilnehmerleistungsmerkmals durch Betätigen einer an dem jeweiligen Kommunikationsendgerätes (KE) angeordneten Bestätigungstaste (BT) der zentrale Steuerprozeß (COP) dazu veranlaßt wird, den vermittlungstechnischen Prozessen (VTP) des Kommunikationssystems das bestätigte Teilnehmerleistungsmerkmal mitzuteilen.

2. Verfahren nach Anspruch 1,
**dadurch gekennzeichnet,**
daß bei Inbetriebnahme eines Kommunikationsendgerätes (KE) des Kommunikationssystems endgeräteindividuelle Informationen in eine statische Datenbasis (SD) eingeschrieben werden und in Abhängigkeit von derselben eine Vormarkierung von in den weiteren Menütabellen (MENU) abgelegten Teilnehmerleistungsmerkmalen durchgeführt wird.

3. Verfahren nach Anspruch 1 oder 2,
**dadurch gekennzeichnet,**
daß bei Inbetriebnahme eines Kommunikationssystems systemspezifische Informationen in die statische Datenbasis (SD) eingeschrieben werden und in Abhängigkeit von derselben eine Vormarkierung von in den weiteren Menütabellen (MENU) abgelegten Teilnehmerleistungsmerkmalen durchgeführt wird.

4. Verfahren nach einem der Ansprüche 1 bis 3,
**dadurch gekennzeichnet,**
daß die dynamische Datenbasis (DD) mit Signalisierungsinformationen eines rufenden Kommunikationsendgerätes (KE) sowie mit den von dem zugehörigen gerufenen Kommunikationsendgerät ausgehenden Signalisierungsinformationen aktualisiert wird.

5. Verfahren nach einem der vorhergehenden Ansprüche,
**dadurch gekennzeichnet,**
daß vom zentralen Steuerprozeß (COP) Bewertungen durchgeführt werden, welche Teilnehmerleistungsmerkmale in dem jeweiligen vermittlungstechnischen Zustand des Kommunikationsendgerätes (KE) und welche Teilnehmerleistungsmerkmale bei der jeweiligen Verbindung durchführbar sind, und daß die Resultate der Bewertungen jeweils in einer Verknüpfungstabelle (V) abgelegt werden.

6. Verfahren nach Anspruch 5,
**dadurch gekennzeichnet,**
daß die Resultate der Bewertungen in der Verknüpfungstabelle (V) miteinander logisch verknüpft, das Ergebnis in einen Vektor (VE) aufgenommen und dieser als Meldung zu dem jeweiligen Teilnehmeranschlußmodul (SLMO) gesendet wird.

## Claims

1. Method for soft-key control of communications terminals of a communications system, having
- soft-key-capable communications terminals (KE) which are connected via subscriber lines (T) to at least one subscriber connection module (SLMO) and which transmit, in two B channels and one D channel, the information originating from them, signalling information and/or switching status information of the respective communications terminal (KE) being transmitted in the D channel, and having
- a cental control device (CP) in which menu tables (MENU), containing a plurality of subscriber performance features, as well as procedures for soft-key control of the communications terminals (KE) are stored,
characterized
- in that a dynamic database (DD) which is stored in the central control device (CP) is updated by means of a central control process (COP), which runs in the central control device (CP) and monitors the D channels of the individual communications terminals (KE), with reference to the signalling information and/or switching status information obtained from the D channels,
- in that the central control process (COP) is caused, at every status change of the information stored in the dynamic database, to carry out evaluations of the information stored in the dynamic database (DD) and to select only specific subscriber performance features of the menu tables (MENU) for the respective communications terminal (KE) as a function of the result of the evaluations,
- in that, in response to the selection of the subscriber performance features by the central control process (COP), a message which contains the result of the selection is transmitted to the subscriber connection module (SLMO) connected to the respective communications terminal (KE),
- in that the subscriber performance features are marked in further menu tables (MENU) stored in the subscriber connection module (SLMO),
- in that the subscriber performance features which are marked in this way are logically connected to subscriber performance features which are already premarked when activation occurs, and only specific subscriber performance features are selected, as a result of the logical connection, and these performance features are fed to a terminal-specific database (TLND),
- in that in each case one of the selected subscriber performance features is displayed at the respective communications terminal (KE) as a function of the activation of a sequence key (FT) arranged at the respective communications terminal (KE), and
- in that, in response to the confirmation of the subscriber performance feature which is currently displayed at the respective communications terminal (KE), the central control process (COP) is caused, by activating a confirmation key (BT) arranged at the respective communications terminal (KE), to report the confirmed subscriber performance feature to the switching processes (VTP) of the communications system.

2. Method according to Claim 1, characterized in that, when a communications terminal (KE) of the communications system is activated, terminal-specific information is input into a static database (SD) and subscriber performance features which are stored in the further menu tables (MENU) are premarked as a function thereof.

3. Method according to Claim 1 or 2, characterized in that, when a communications system is activated, system-specific information is input into the static database (SD) and subscriber performance features which are stored in the further menu tables (MENU) are premarked as a function thereof.

4. Method according to one of Claims 1 to 3, characterized in that the dynamic database (DD) is updated with signalling information of a calling communications terminal (KE) and with the signalling information originating from the associated, called communications terminal.

5. Method according to one of the preceding claims, characterized in that the central control process (COP) carries out evaluations to determine which subscriber performance features can be carried out in the respective switching state of the communications terminal (KE) and which subscriber performance features can be carried out during the respective connection, and in that the results of the evaluations are each stored in a logic connection table (V).

6. Method according to Claim 5, characterized in that the results of the evaluations in the logic connection table (V) are logically connected to one another, the result is recorded in a vector (VE) and the latter is transmitted, as a message, to the respective subscriber connection module (SLMO).

## Revendications

1. Procédé de commande par touches logicielles de terminaux de communication d'un système de communication, comportant
- des terminaux (KE) de communication compatibles avec des touches logicielles, qui sont raccordées par l'intermédiaire de circuits (T) de raccordement d'abonnés à au moins un module (SLMO) de raccordement d'abonnés et qui transmettent les informations partant de ceux-ci dans deux canaux B et dans un canal D, des informations de signalisation et/ou des informations d'états de commutation du terminal (KE) de communication considéré étant transmises dans le canal D et
- un dispositif (CP) central de commande, dans lequel sont mémorisés une multiplicité de tableaux (MENU) de menu comprenant les facilités offertes aux abonnés ainsi que des procédures pour la commande par touches logicielles des terminaux (KE) de communication,
caractérisé en ce que
- on met à jour une base de données (DD) dynamique stockée dans le dispositif (CP) central de commande par un processus (COP) central de commande se déroulant dans le dispositif (CP) central de commande et contrôlant les canaux D des divers terminaux (KE) de communication sur la base des informations de signalisation et/ou des informations d'état de commutation prélevées des canaux D,
- on amène le processus (COP) central de commande, à chaque changement d'état des informations stockées dans la base de données dynamique à effectuer des exploitations des informations stockées dans la base de données dynamiques et à ne sélectionner, en fonction du résultat des exploitations, que certaines facilités offertes aux abonnés des tableaux (MENU) de menu pour le terminal de communication (KE),
- on envoie, à la suite de la sélection des facilités offertes aux abonnés, par le processus (COP) central de commande un message contenant le résultat de la sélection au module (SLMO) de raccordement d'abonnés relié au terminal (KE) de communication considéré,
- on effectue un repérage des facilités offertes aux abonnés dans d'autres tableaux (MENU) de menu mémorisés dans le module (SLMO) de raccordement d'abonnés,
- on combine logiquement les facilités offertes aux abonnés repérées de cette manière à des facilités offertes aux abonnés déjà repérées au préalable lors de la mise en service et on sélectionne comme résultat de la combinaison seulement certaines facilités offertes aux abonnés et on envoie celles-ci à une base (TLND) de données propre au terminal,
- on affiche sur le terminal (KE) de communication considéré l'une des facilités offertes aux abonnés sélectionnées en fonction de l'actionnement d'une touche (FT) de suite disposée sur le terminal (KE) de communication considéré, et
- on amène le processus (COP) central de commande, suite à la confirmation de la facilité offerte aux abonnés affichée justement sur le terminal (KE) de communication considéré, par actionnement d'une touche (BT) de confirmation prévue sur le terminal (KE) de communication considéré à communiquer la facilité offerte aux abonnés confirmée aux processus (VTP) techniques de commutation du système de communication.

2. Procédé suivant la revendication 1,
caractérisé en ce que
on écrit lors de la mise en service d'un terminal (KE) de communication du système de communication des informations propres au terminal dans une base (SD) de données statique et on effectue en fonction de ces informations un repérage préalable de facilités offertes aux abonnés stockées dans les autres tableaux (MENU) de menu.

3. Procédé suivant la revendication 1 ou 2,
caractérisé en ce que
on écrit lors de la mise en service d'un système de communication des informations spécifiques au système dans la base (SD) de données statiques et on effectue un repérage préalable de facilités offertes aux abonnés stockées dans les autres tableaux (MENU) de menu en fonction de ces informations.

4. Procédé suivant l'une des revendications 1 à 3,
caractérisé en ce que
on met à jour la base (DD) de données dynamique par des informations de signalisation d'un terminal (KE) de communication appelant ainsi que par les informations de signalisation provenant du terminal de communication appelé associé.

5. Procédé suivant l'une des revendications précédentes,
caractérisé en ce que
on effectue par le processus (COP) central de commande des exploitations pour connaître celles des facilités offertes aux abonnés qui peuvent être mises en oeuvre dans l'état de commutation considéré du terminal (KE) de communication et celles des facilités offertes aux abonnés qui peuvent être mises en oeuvre pour la communication considérée et on stocke les résultats des exploitations dans un tableau (V) combinatoire.

6. Procédé suivant la revendication 5,
caractérisé en ce que
on combine logiquement entre eux les résultats des exploitations dans le tableau (V) combinatoire, on met le résultat dans un vecteur (VE) et on envoie celui-ci sous forme de message au module (SLMO) de raccordement d'abonnés.
